# EUROPÄISCHE PATENTANMELDUNG

(11) **EP 0 714 680 A2**
(43) Veröffentlichungstag der Anmeldung: **05.06.1996**
(21) Anmeldenummer: 95118412.6
(22) Anmeldetag: 23.11.1995
(51) Int. Cl.: A63B 47/00

(54) **Tennistrainerbehälter**

(30) Priorität: 28.11.1994 DE 4442192
(71) Anmelder: Pokroppa, Patricia, D-26603 Aurich (DE)
(72) Erfinder: Pokroppa, Patricia, D-26603 Aurich (DE)

(57) **Zusammenfassung**

2. 1 Beim Tennistraining werden u. a. bestimmte Schläge durch häufiges Wiederholen geübt. Hierzu spielt der Tennistrainer seinem Schüler den Ball wiederholt zu. Der Ball wird dabei einem Vorrat entnommen, d. h. vom Boden aufgenommen oder beispielsweise einem Einkaufswagen entnommen. Häufiges Bücken ist die Folge. Die Erfindung soll die Aufnahme der Bälle erleichtern.

2. 2 Der erfindungsgemäße Behälter zur Aufnahme der Tennisbälle weist einen höhenverstellbaren Boden auf, so daß die Bälle stets in der gleichen Höhe entnehmbar sind.

## Beschreibung

Die Erfindung betrifft einen Behälter zur Aufnahme von Bällen, insbesondere Tennisbällen, mit einem Boden und angrenzenden seitlichen Wandungen und mit einer vorzugsweise oberen Öffnung zur Entnahme der Bälle.

Bälle für Ballsportarten werden im Training üblicherweise in Behältern bereitgehalten regelmäßig von einer Person entnommen und von einer dritten Person zu Übungszwecken gespielt. Beispielsweise entnimmt ein Tennistrainer in laufender Folge die Tennisbälle einem fahrbaren Behälter, etwa einem zweckentfremdeten Einkaufswagen, um sie dem von ihm trainierten Spieler zuzuspielen. Gerade bei körperlich gut trainierten Spielern sind die Bälle über längere Zeit und in kurzer Abfolge zu spielen. Für den Trainer bedeutet dies eine hohe körperliche Belastung. Entweder werden die Bälle dem Behälter entnommen, so daß dessen Füllstand langsam abnimmt. Allenfalls die obere Lage der Bälle ist in einer ergonomisch günstigen Höhe für den Entnehmenden, d.h. für den Trainer. Oder es ist nicht einmal ein Behälter vorhanden, so daß die Balle vom Boden aufgenommen werden müssen.

Die Aufgabe der vorliegenden Erfindung besteht darin einen Behälter zu schaffen, mit dem die Bälle in einer für die Entnahme günstigen Position bereitgehalten werden können.

Erfindungsgemäß wird die Aufgabe dadurch gelöst; daß der Boden (des Behälters) in seiner Höhe verstellbar ist. Eine Ballentnahme aus einer ungünstigen Höhe kann damit vermieden werden.

Vorteilhafterweise ist der Boden (des Behälters) federgelagert, insbesondere auf einem Federlager ruhend, wobei die Höhe des Bodens in Abhängigkeit von der Anzahl bzw. dem Gewicht der im Behälter befindlichen Bälle variiert. Das Entnahmeniveau der Bälle wird so automatisch an den Füllstand angepaßt. Naturgemäß ist die Federkennung bzw. Federkennzahl der Lagerung auf die Masse der aufzunehmenden Bälle abzustimmen.

Weitere Merkmale der Erfindung ergeben sich aus den Ansprüchen sowie aus den übrigen Unterlagen. Ein Ausführungsbeispiel wird nachfolgend anhand von Zeichnungen näher beschrieben.

Es zeigen:
- Fig. 1: einen mit Tennisbällen abgefüllten Behälter mit fahrbarem Gestell in einer seitlichen Schnittansicht,
- Fig. 2: den Behälter gemäß Fig. 1 ohne Füllung,
- Fig. 3: einen Querschnitt des Behälters gemäß Fig. 1 entlang der Linie III - III,
- Fig. 4: einen Behälter in der Seitenansicht mit fahrbarem Gestell,
Ein Behälter 1 ist aufrecht stehend mit rechteckigem bzw. quadratischem Querschnitt ausgebildet und weist seitliche Wandungen 9, oberhalb einer diese verbindenden Unterwandung sowie eine obere Öffnung 8 auf. Innerhalb des Behälters ist ein höhenverstellbarer Boden 4 - parallel zur Unterwandung 9 a - auf einer Druckfeder 2 gelagert. Die Druckfeder ist nach Art einer Spiralfeder ausgebildet, mit einem unteren Ende 2 a auf der Unterwandung 9a befestigt und wird von einem innenliegenden Führungsrohr 3 geführt oder abgestützt, das ebenfalls auf der Unterwandung 9 a aufsteht. Das obere Ende 2 a der Druckfeder 2 ist mit dem Boden 4 verbunden.

Der Behälter 1 bzw. dessen Bestandteile sind aus Kunststoff Holz, Stahlblech Leichtmetall oder ähnlichem gefertigt.

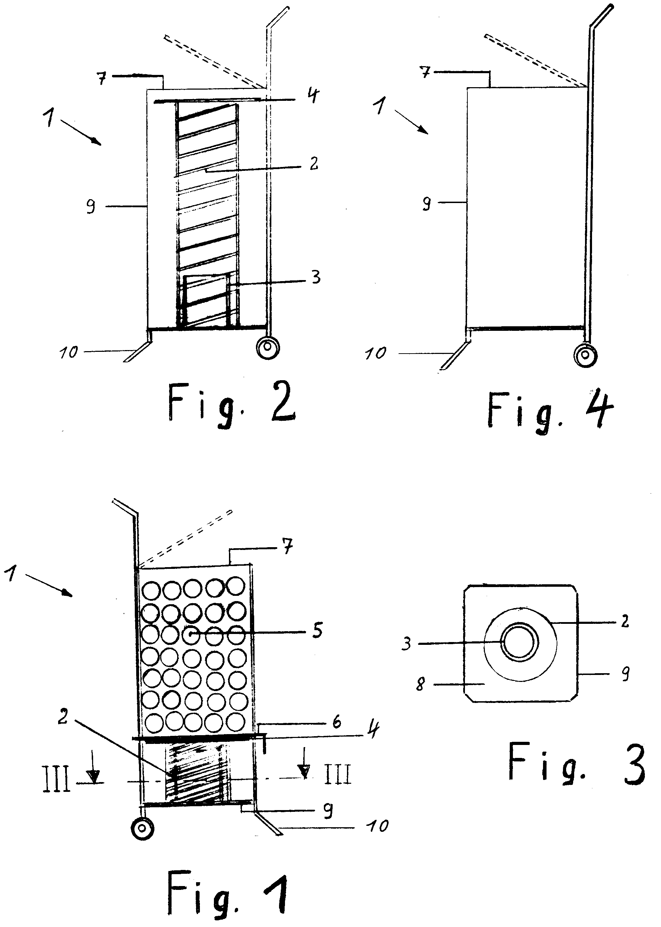

In der Fig. 1 ist der Behälter 1 mit Tennisbällen 5 bis zu einem oberen Rand 7 gefällt. Die Tennisbälle liegen auf dem Boden 4 auf und drücken diesen durch ihr Eigengewicht nach unten und damit die Druckfeder 2 bis in die in der Fig. 1 gezeigten Position zusammen. Das Führungsrohr 3 ist etwa so lang, daß es die Druckfeder 2 in dieser zusammengedrückten Stellung über fast die ganze Federlänge führt. Das Führungsrohr 3 ist vorzugsweise aus Kunststoff etwa aus PVC, hergestellt.

Der Behälter 1 ist durch einen an die seitliche Wandung angelenkten Deckel verschließbar. Der Deckel ist in nicht näher gezeigter Weise abschließbar und vorzugsweise auch abnehmbar, etwa durch ein Steckscharnier. Als Verschluß kann beispielsweise eine mit der seitlichen Wandung 9 über ein Vorhängeschloß verbindbare Klapplasche oder ein entsprechender Bügel vorgesehen sein.

Fig. 2 zeigt den Behälter 1 in unbefüllter Position. Entsprechend ist die Druckfeder 2 entspannt und der Boden 4 nahe dem oberen Rand 7. Das Befällen des Behälters 1 kann so erfolgen, daß die Bälle 5 einfach eingegeben werden. Unter dem Gewicht der Bälle gibt die Druckfeder 2 nach und der Boden 4 bewegt sich nach unten, so daß stets das Einfüllen weiterer Bälle möglich ist.

Vorzugsweise erfolgt das Befüllen des Behälters 1 nach vorherigem manuellen Absenken des Bodens 4. Letzterer kann in der in der Fig. 1 gezeigten Befüll-Position arretiert werden. Hierzu ist eine Stange 6 durch nicht gezeigte Bohrungen quer zum Federweg der Druckfeder 2 oberhalb der Position des Bodens 4 durch den Behälter 1 hindurchführbar. Der Boden 4 drückt dann gegen die Stange 6. Es sind jetzt Tennisbälle 5 bis zum oberen Rand 7 einfüllbar. Ein Durchrutschen der Stange 6 und ein leichtes Erfassen derselben wird durch eine 1-förmig abgewinkeltes Kopfstück gewährleistet, das gemäß Fig 1 außerhalb des Behälters 1 verbleibt. Zur Entnahme der Bälle wird die Stange 6 am Kopfstück herausgezogen, so daß der Boden 4 unter dem Druck der Feder 2 beweglich ist. In Abhängigkeit von der Entnahme der Bälle 5 gibt der Boden 4 dem Druck der Feder 2 nach so daß die obersten Bälle stets nahe dem oberen Rand 7 zu liegen kommen und von einer Person, beispielsweise von einem Tennistrainer, mühelos und ohne Bücken entnehmbar sind.

Die seitlichen Wandungen 9, erstrecken sich etwa über eine Höhe von 57 cm, bei einem Verstellweg des Bodens 4 von etwa 39 cm. Bei quadratischem Querschnitt beträgt der Durchmesser des Behälters im Bereich der Unterwandung 9 a etwa 30 cm und im Bereich des oberen Randes 7 etwa 32 cm. Die Konizität der Behälterwandungen erleichtert die Aufwärtsbewegung des Bodens 4 bei Entnahme der Bälle.

Der Behälter ist zur Aufnahme von etwa 110 Tennisbällen geeignet. Diese weisen insgesamt ein Gewicht von 6,5 kg auf. Die Druckfeder 2 ist von ihrer Kennlinie und von ihrem Federweg her so aufgelegt, daß bei einer Beladung von 6,5 kg (110 Bälle) die Befüll-Position gemäß Fig. 1 eingehalten wird und nach Entnahme aller Bälle die Leer-Position gemäß Fig. 2 erreicht wird.

Vorzugsweise ist die Druckfeder 2 als Spiralfeder aus Federstahl ausgeführt.

In der Fig. 3 ist nochmals die Führung der Druckfeder 2 durch das innere Führungsrohr 3 genauer erkennbar.

Gemäß Fig. 4 ist der Behälter 1 mit einem Gestell versehen, das aus einem vertikal gerichteten Hochrahmen und einem hierzu abgewinkeltem unteren Rahmen besteht. Letzterer weist an einem Ende eine Bodenstütze und am anderen Ende eine Aufnahme für eine Achse mit zwei Rädern auf. Die Aufnahme ist zugleich Verlängerung des Hochrahmens nach unten. Der Hochrahmen ist an seinem oberen Ende mit Handgriffen versehen. Die Druckfeder 2 weist einen Außendurchmesser von etwa 16 - 17 cm auf.

### Bezugszeichenliste:

- 1: Behälter mit Deckel, Griffstange, Bodenstütze und Räder
- 2: Druckfeder
- 2 a: Oberes Ende
- 2 b: Unteres Ende
- 3: Rohr
- 4: Boden
- 5: Tennisbälle
- 6: Stange mit Kopfstück
- 7: Oberer Rand
- 8: Öffnung
- 9: Seitliche Wandung
- 9 a: Untere Wandung
- 10: Bodenstütze

## Patentansprüche

1. Behälter zur Aufnahme von Bällen, insbesondere Tennisbällen 5, mit einem Boden 4 und angrenzenden seitlichen Wandungen 9 und mit einer vorzugsweise oberen Öffnung 8 zur Entnahme der Bälle, dadurch gekennzeichnet, daß der Boden 4 in seiner Höhe verstellbar ist.

2. Behälter nach Anspruch 1, dadurch gekennzeichnet, daß der Boden 4 federgelagert ist, insbesondere auf einem Federlager ruht und die Höhe des Bodens 4 in Abhängigkeit von der Anzahl bzw. dem Gewicht der im Behälter 1 befindlichen Bälle 5 variiert.

3. Behälter nach Anspruch 2, dadurch gekennzeichnet, daß die seitlichen Wandungen 9 im unteren Bereich mit einer Unterwandung 9a abschließen, oberhalb derer der Boden 4 federgelagert ist.

4. Behälter nach Anspruch 3, dadurch gekennzeichnet, daß der Boden 4 auf einer Druckfeder 2, insbesondere einer Spiralfeder ruht, die auf der Unterwandung 9a angeordnet ist und/oder deren (die Spiralfeder) unteres Ende 2a relativ zu den seitlichen Wandungen 9 fest angeordnet ist und daß ein oberes Ende 2 b der Spiralfeder mit dem Boden 4 verbunden ist.

5. Behälter nach Anspruch 4, dadurch gekennzeichnet, daß die Spiralfeder teilweise geführt ist, insbesondere durch ein im Inneren der Spiralfeder angeordnetes Führungsrohr 3, das vorzugsweise mit der Unterwandung 9 a verbunden ist.

6. Behälter nach Anspruch 5, dadurch gekennzeichnet, daß das Führungsrohr 3 etwa so lang ist , wie die Länge der Spiralfeder 2 unter Vollast bzw. Sollast.

7. Behälter nach einem oder mehreren der Ansprüche 1 bis 6, dadurch gekennzeichnet, daß die seitlichen Wandungen 9 konisch verlaufen mit einem nach oben hin zunehmenden, vorzugsweise rechteckigen Behälterquerschnitt, und insbesondere mit einer leichten Konizität von etwa 2 : 57 (2 cm Durchmesseränderung bei 57 cm Behälterhöhe).

8. Behälter nach einem oder mehreren der Ansprüche 1 bis 7, dadurch gekennzeichnet; daß der Boden 4 in einer bestimmten Höhe, insbesondere in einer der vollen Beladung des Behälters 1 entsprechenden Höhe feststellbar ist.

9. Behälter nach Anspruch 8, dadurch gekennzeichnet, daß die seitlichen Wandungen 9 einander gegenüberliegende Bohrungen aufweisen zum Eingriff einer steckbaren Feststellstange 6 und daß die Bohrungen vorzugsweise unmittelbar oberhalb der Position des Bodens 4 bei voller Beladung des Behälters 1 angeordnet sind.

10. Behälter nach einem oder mehreren der Ansprüche 1 bis 9, gekennzeichnet durch einen Deckel zum Verschließen einer Behälteröffnung 8, der ( der Deckel ) vorzugsweise klappbar, abnehmbar und/oder abschließbar ist.
